# EUROPEAN PATENT APPLICATION

(11) **EP 4 302 869 A1**
(43) Date of publication of application: **10.01.2024**
(21) Application number: 22183276.9
(22) Date of filing: 06.07.2022
(51) Int. Cl.: B01J 13/14, B01J 13/20, C11D 3/50

(54) **BIODEGRADABLE PROTEIN AND POLYSACCHARIDE-BASED MICROCAPSULES**

(71) Applicant: International Flavors & Fragrances Inc., New York, NY 10019 (US)
(72) Inventor: STOICA, Sonia-Patricia, 1221 Hilversum (NL)
(74) Representative: International N&H EMEA

(57) **Abstract**

Disclosed are core-shell microcapsule compositions composed of microcapsules having a wall formed by of a denatured pea or whey protein and an isocyanate in the presence of a beta-1-4 non-ionic polysaccharide, such as xyloglucan. Also disclosed are consumer products containing such a core-shell microcapsule composition and methods for producing core-shell microcapsule compositions.

## Description

### FIELD OF THE INVENTION

The present disclosure is directed towards microcapsules having polymeric wall material composed of denatured protein (*e.g*., denatured pea or whey protein) and a beta-1-4 non-ionic polysaccharide (*e.g*., xyloglucan), which exhibit improved wall strength. The disclosure also relates to consumer products containing such microcapsules and methods of uses thereof.

### BACKGROUND OF THE INVENTION

Microcapsules are useful in a variety of applications where there is a need to deliver, apply, or release a fragrance or other active material in a time-delayed and controlled manner.

Conventional microcapsules each have a polymeric shell encapsulating an active material in a microcapsule core. The polymeric shell is typically formed via an interfacial polymerization reaction, namely, a polymerization that occurs at an interface between an aqueous phase and an oil phase. These microcapsules have been developed to provide good performance in various consumer products such as laundry detergents. See, *e.g.*, US7,491,687, US6,045,835, US2014/0287008, and WO2015/023961. Polyurea microcapsules have been developed for delivering fragrances. Their preparation involves the polymerization reaction between wall-forming materials, *e.g*., a polyisocyanate and a polyamine. During the polymerization reaction, the polyisocyanate can react with many fragrance ingredients such as primary alcohols contained in a fragrance accord. The other wall-forming material polyamine is also reactive towards aldehyde fragrance ingredients. Primary alcohols and aldehydes are common ingredients in many fragrance accords. Such fragrance ingredients are not suitable to be encapsulated by conventional microcapsules. In addition, fragrance ingredients having a high-water solubility are also unsuitable for conventional encapsulation as these ingredients tend to stay in the aqueous phase instead of being encapsulated in the microcapsule oil core. Challenges remain in encapsulating fragrances and other active materials without losing reactive and/or water-soluble ingredients. Applicant is not aware of any other approaches that have successfully overcome these problems mentioned herein above.

Methods to incorporate biodegradable polymers into microcapsule compositions have been described. For example, US10,034,819B2 and US2019/0240124A1 teach microcapsules with an inner shell and outer shell, wherein the outer shell is produced by complex coacervation of first polyelectrolyte such as gelatin and a second polyelectrolyte such as carboxymethyl cellulose, sodium carboxymethyl guar gum, xanthan gum and plant gums.

Similarly, EP2588066B1 describes a coacervated capsule prepared with a coating layer composed of a protein, and optionally a non-protein polymer. Further, EP2811846B1 describes the use of protein aggregates as an interface layer around a hydrophobic substance. EP1855544B2 teaches the use of the encapsulation of an active ingredient in a matrix composed of 0.5-95 wt% of anionic polysaccharides and 0.5-95 wt% of peptides having a molecular mass within the range of 0.3-12 kDa. EP3746217A1 and WO2020/195132A1 describe the preparation of core-shell microcapsules by cross-linking a protein into the wall of the microcapsule. US10,166,196B2 discloses an agglomeration of primary microcapsules composed of a primary shell and outer shell, wherein the outer shell is the primary shell and outer shell are products of a complex coacervation reaction of a first protein such as a pea or soy protein and a second polymer such as an agar, gellan gum, gum arabic, casein, cereal prolamine, pectin, alginate, carrageenan, xanthan gum, canola protein, dilutan gum, locus bean gum, or welan gum.

Other attempts propose using xyloglucan as deposition polymer grafted onto polyurea or melamine formaldehyde microcapsules, mainly to enhanced deposition on clothing. For instance, WO2008/145547A1 discloses a process for attachment of a non-ionic deposition polymer, substantive to textiles, to core shell particles. Example 8 provides for the attachment of both locust bean gum and xyloglucan non-ionic deposition polymers to microcapsules by use of various addition polymers. Also, there is no mention of the use of biodegradable protein for capsule shell.

WO2012/007438A1 discloses a benefit agent containing particle comprising a multi layered shell in which the outer shell may be a polyurea with a deposition polysaccharide polymer (*e.g.*, xyloglucan) exterior to the shell (*see* claim 4 and pgs. 28-30). The deposition aid is grafted onto the particles *via* stirring with heat at 80°C in presence of ascorbic acid and methyl acrylate.

WO2012/038144A1 discloses the attachment of xyloglucan deposition agent *via* polyvinylacetate formulations to preformed melamine formaldehyde perfume microcapsules, to enhance deposition on clothing even in the presence of mannanase (*see* example 3).

WO2016/177607A1 discloses polyurea microcapsules containing a benefit agent (*e*.*g*., fragrance) inside a polyurea shell that is characterized by a xyloglucan deposition polymer grafted onto it, which aids to reduce agglomeration of the microcapsules for improved dispersion in surfactant containing products. The xyloglucan deposition polymer is added at various time points (7 mins, 15 mins, 30 mins, 45 mins or 60 mins) after the encapsulation process had started, and before the curing step (*see* Example 1). There is also no mention of the use of plant protein, or specifically pea protein, for the capsule shell.

WO2007/062833A1 discloses use of polyxyloglucan as uncharged polysaccharide material onto a melamine formaldehyde as shell material of core shell polymer particles comprising a benefit agent (*e*.*g*., perfume). There is also no mention of the use of plant or pea protein for capsule shell.

These existing solutions still have limitations and do not adequately teach how to overcome the above-mentioned problems. Accordingly, there is a need to develop a microcapsule composition suitable for encapsulating active materials having ingredients that are sustainable and biodegradable.

### SUMMARY OF THE INVENTION

In a first aspect, the present disclosure provides a core-shell microcapsule composition, wherein the microcapsule has a microcapsule core and a microcapsule wall encapsulating the microcapsule core, the microcapsule core contains an active material, wherein the active material comprises at least one fragrance, pro-fragrance, malodor counteractive agent, or a combination thereof, and the microcapsule wall is formed of a polymeric network comprising a denatured pea protein or a denatured whey protein and a beta-1-4 non-ionic polysaccharide, wherein the microcapsule wall is characterized by a nominal rupture force of at least 100 µN. In some aspects, the core-shell microcapsule composition is prepared by a process in which the beta-1-4 non-ionic polysaccharide is added within at least 1 minute, preferably within at least 30 seconds, or preferably immediately before the commencement of the curing of the polymeric network, or within at least 1 minute, preferably within at least 30 seconds, or preferably immediately after the commencement of curing of the polymeric network. In certain aspects, the beta-1-4 non-ionic polysaccharide is xyloglucan, wherein the xyloglucan is present in an amount of from 0.1 wt% to 5 wt%, or 0.1 wt% to 1 wt%, or 0.1 wt% to 0.5 wt%, relative to the weight of the composition. In other aspects, the weight ratio of the beta-1-4 non-ionic polysaccharide to the denatured pea protein or the denatured whey protein is in the range of 1:6 to 1:7.5. In further aspects, the microcapsule includes polyurea, wherein the weight ratio of the beta-1-4 non-ionic polysaccharide to the polyurea microcapsule shell is in the range of 1:3 to 1:5. In yet other aspects, the active material is a fragrance present at a level of 1 wt% to 35 wt% relative to the weight of the composition; the active material is a fragrance present in an amount of 0.01 wt% to 1 wt%, relative to the total weight of the composition, and the fragrance comprises at least five High Performance fragrance ingredients comprising Ultra High-Impact fragrance ingredients as listed in Table 1 and/or High-Impact fragrance ingredients as listed in Table 2; or the fragrance is a neat fragrance, an encapsulated fragrance or a combination thereof and the weight ratio of the Ultra High-Impact fragrance ingredients to the High-Impact fragrance ingredients is in the range of 1:0 to 1:19. In still further aspects, the denatured pea protein or the denatured whey protein has purity of at least 80%.

The present disclosure also encompasses a method for producing a core-shell microcapsule composition by (a) preparing an aqueous phase by: (i) combining a denatured pea protein or a denatured whey protein with water; (ii) adjusting the pH to above 9; and (iii) adding gum Arabic and guanidine carbonate and mixing until homogenous; (b) preparing an oil phase comprising an active material and trimethylol propane-adduct of xylylene diisocyanate, wherein the trimethylol propane-adduct of xylylene diisocyanate is present at a level between 0.1% and 8% based on the weight of the core-shell microcapsule composition; (c) emulsifying the oil phase into the aqueous phase to form an emulsion; (d) adding the beta-1-4 non-ionic polysaccharide to the emulsion within at least 1 minute, preferably within at least 30 seconds, or preferably immediately before commencement of of curing step (e) or within at least 1 minute, preferably within at least 30 seconds, or preferably immediately after commencement of curing step (e); and (e) curing the emulsion at a temperature below 80°C so that a core-shell microcapsule composition is produced.

A consumer product (*e.g.*, a fabric softener, a fabric refresher, or a laundry detergent) including the core-shell microcapsule composition is also provided, wherein the consumer product is preferably in the form of a spray-dried powder and/or further includes 0.1 wt% to 10 wt%, relative to the weight of the consumer product, at least one or more detersive enzymes.

A method for increasing the performance of a core-shell microcapsule composition in a powder application is also provided, which includes the steps of preparing a core-shell microcapsule in the presence of a denatured pea protein or a denatured whey protein and adding a beta-1-4 non-ionic polysaccharide within at least 1 minute, preferably within at least 30 seconds, or preferably immediately before commencement of curing of the core-shell microcapsule or within at least 1 minute, preferably within at least 30 seconds, or preferably immediately after commencement of curing of the core-shell microcapsule, thereby increasing the performance of the core-shell microcapsule composition compared to a control microcapsule composition in a powder application, wherein the increased performance includes higher rupture force, improved applied stress tolerance, improved sensory performance, enhanced deposition of the microcapsule on a surface, increased stability or a combination thereof.

All parts, percentages and proportions referred to herein and in the claims are by weight unless otherwise indicated.

The values and dimensions disclosed herein are not to be understood as being strictly limited to the exact numerical values recited. Instead, unless otherwise specified, each such value is intended to mean both the recited value and a functionally equivalent range surrounding that value. For example, a value disclosed as "50%" is intended to mean "about 50%."

The details of one or more aspects of the disclosure are set forth in the description below. Each of the aspects and embodiments described herein are capable of being used together, unless excluded either explicitly or clearly from the context of the embodiment or aspect. These and other features, objects, and advantages of the disclosure will be apparent to those skilled in the art from the detailed description and the drawing in conjunction with the appended claims.

### BRIEF DESCRIPTION OF THE DRAWINGS

While the specification concludes with claims particularly pointing out and distinctly claiming the invention, it is believed that the invention will be better understood from the following description of the accompanying figure wherein:
FIG. 1 shows sensory performance evaluations of Microcapsules 1-4 (prepared with the addition of xyloglucan at different times) compared to Microcapsule 12 (no xyloglucan) dosed over the side in powder detergent and hand washed.
FIG. 2 shows sensory performance evaluations of Microcapsules 1 and 7 dosed over the side in powder detergent and hand washed.
FIG. 3 shows sensory performance evaluations of pea protein-xyloglucan microcapsules (Microcapsule 1) compared to modified starch microcapsules sprayed to powder detergent with and without xyloglucan and/or extra cross-linker (Microcapsules 10-12). Microcapsule 13 is a commercial melamine formaldehyde microcapsule with xyloglucan added as deposition aid.
FIG. 4 shows fresh sensory performance evaluations of pea protein-xyloglucan microcapsules (Microcapsules 8-9) compared to Comparative Microcapsule 14 (no xyloglucan) after spraying to powdered detergent and evaluated in a hand wash application.

### DETAILED DESCRIPTION OF THE INVENTION

This present disclosure provides microcapsules having a polymeric wall material composed of a denatured protein (*e*.*g*., denatured pea or whey protein) and a beta-1-4 non-ionic polysaccharide (*e*.*g*., xyloglucan), which exhibit improved wall strength thereby providing lower microcapsule breakage percent after spraying to powders. Advantageously, the microcapsules can achieve a fragrance load of up to 35% and show improved dry performance in powder detergent application as compared to protein capsules with no beta-1-4 non-ionic polysaccharide (*e*.*g*., xyloglucan). The microcapsules of the present disclosure can also advantageously show equal performance to commercial melamine formaldehyde capsules. Notably, denatured protein is an essential component of the polymeric wall material as replacing the denatured protein with another biopolymer such as modified starch diminished wall strength. Further, addition of the beta-1-4 non-ionic polysaccharide to the reaction mixture directly after emulsification and shortly before or after, preferably immediately before or immediately after, curing has started was found to mediate the observed improvement in wall strength and provide low capsule breakage when sprayed. Moreover, the amount of beta-1-4 non-ionic polysaccharide was found to be a mitigating factor in wall strength with the addition of more than 0.14%, most preferably at least 0.26%, providing low microcapsule breakage when sprayed and hence good dry performance in powders. Thus, the denatured protein-polysaccharide microcapsules of this present disclosure find use in the encapsulation of fragrances, pro-fragrance, malodor counteractive agent, cosmetics, colorants, vitamins, antioxidants and the like and delivery of the same in consumer products such as powder detergents, liquid detergents, fabric conditioners, antiperspirants, deodorants, fine fragrances, and hair care products.

In some aspects, this present disclosure provides a core-shell microcapsule composition composed of microcapsules, in particular protein-polysaccharide-polyurea-based microcapsules, wherein the core of the microcapsules includes an active material and the shell of the microcapsules is formed in a cross-linking reaction between a denatured pea protein or a denatured whey protein and a polyisocyanate in the presence of a beta-1-4 non-ionic polysaccharide. In some aspects, the shell of the microcapsules is formed in a cross-linking reaction between a combination of a denatured pea protein and a denatured whey protein and a polyisocyanate in the presence of a beta-1-4 non-ionic polysaccharide.

The terms "microcapsule" and "capsule" are used herein interchangeably and refer to a core-shell structure, wherein the encapsulating material forms the shell or wall while active materials form the core. The microcapsules of the present disclosure typically have a mean particle size in the range of from about 0.1 to about 1000 microns in diameter (*e.g.*, about 0.5 to about 500 microns, about 1 to about 200 microns, about 1 to about 100 microns, about 2 to about 50 microns, about 5 to about 25 microns, and about 1 to about 10 microns). The microcapsules of this invention are single microcapsules (*i.e.,* not agglomerated), and can have a size distribution that is narrow, broad, or multi-modal.

Advantageously, the wall of the instant core-shell microcapsule is characterized by a nominal rupture force of at least about 100 µN, more preferably at least about 110 µN, most preferably at least about 140 µN. The rupture force is the force required to rupture the microcapsules. The measurement is based on a technique known in the art as micromanipulation. See, *e.g.,* Zhang et al. (1999) J. Microencap. 16(1):117-124.

*Denatured Pea or Whey Protein.* Denatured proteins of use in the preparation of the microcapsule wall include denatured pea protein and/or denatured whey protein. The denatured pea protein is intended to include a pea protein isolate, pea protein concentrate, or a combination thereof. Pea protein isolates and concentrates are generally understood to be composed of several proteins. For example, pea protein isolates and concentrates can include legumin, vicilin and convicilin proteins. The term "pea protein" is also intended to include a partially or completely modified or denatured pea protein. Individual storage polypeptides (*e*.*g*., legumin, vicilin, or convicilin) can also be used in the preparation of microcapsules of this invention.

Similarly, the term "whey protein" refers to a protein fraction of milk which does not precipitate at the pH 4.6. The term "whey" encompasses whey derived from cheesemaking or casein manufacture and whey obtained from various membrane filtrations of milk, such as microfiltration, ultrafiltration, nanofiltration, reverse osmosis, diafiltration, chromatography, crystallization or a combination thereof. "Whey protein" is intended to include a whey protein isolate, whey protein concentrate, or a combination thereof.

Ideally, the pea or whey protein of this invention is isolated and optionally purified to homogeneity or near homogeneity, *e*.*g*., at least about 80%, about 85%, about 90%, about 92%, about 95%, about 97%, about 98%, or about 99% pure to the pea or whey protein. Preferably, the pea or whey protein of this invention is denatured, preferably without causing gelation of the protein. Exemplary conditions for protein denaturation include, but are not limited to, exposure to heat or cold, changes in pH, exposure to denaturing agents such as detergents, urea, or other chaotropic agents, or mechanical stress including shear. In some aspects, the pea or whey protein is partially denatured, *e*.*g*., about 50%, about 60%, about 70%, about 80% or about 85% (w/w) denatured. In other aspects, the pea or whey protein is substantially or completely denatured, *e.g.,* at least about 90%, about 95%, or about 100% (w/w) or any intervals therein between denatured. For example, when an about 8% pea storage protein solution (w/v) is used, the solution can be treated at a temperature of 80°C to 90°C for 20 to 30 minutes (or preferably 85°C for 25 minutes) to yield a substantially denatured pea storage protein. Accordingly, depending on the degree of denaturation desired, it will be appreciated that higher temperatures and shorter times can also be employed.

In particular, it has been found that chaotropic agents are particularly useful in providing a denatured protein of use in the preparation of the biodegradable microcapsules of this invention. As is conventional in the art, a chaotropic agent is a compound which disrupts hydrogen bonding in aqueous solution, leading to increased entropy. Generally, this reduces hydrophobic effects which are essential for three dimensional structures of proteins. Chaotropes can be defined by having a positive chaotropic value, *i.e.,* kJ kg⁻¹ mole on the Hallsworth Scale. Examples of chaotropicity values are, for example, CaCl₂ +92.2 kJ kg⁻¹, MgCl₂ kJ kg⁻¹ +54.0, butanol +37.4 kJ kg⁻¹, guanidine hydrochloride +31.9 kJ kg⁻¹, and urea +16.6 kJ kg⁻¹. In certain aspects, the chaotropic agent is a guanidine salt, *e*.*g*., guanidine sulphate, guanidine carbonate, guanidine nitrate or guanidine chloride. In particular aspects, the pea or whey protein is partially or completely denatured with guanidine carbonate.

*Beta-1-4 Non-Ionic Polysaccharide.* A polysaccharide used in the preparation of the microcapsules of the present disclosure is a non-ionic polysaccharide with a linear backbone of beta-(1->4)-linked glucosyl residues, preferably decorated with a regular pattern of alpha-(1->6)-linked xylosyl residues, which are optionally extended with galactosyl, fucosyl, and/or arabinosyl residues. In certain aspects, the polysaccharide is hydrophilic. In particular aspects, the polysaccharide is xyloglucan. Non-ionic beta-1-4 polysaccharides of use in this invention are known in the art and readily available from commercial sources. Preferably, the beta-1-4 non-ionic polysaccharide (*e*.*g*., xyloglucan) is present in an amount of from about 0.1 wt% to about 5 wt%, or about 0.1 wt% to about 1 wt%, or about 0.1 wt% to about 0.5 wt%, relative to the weight of the microcapsule composition. In particular, the beta-1-4 non-ionic polysaccharide is xyloglucan, wherein said xyloglucan is present in the microcapsule composition in an amount of more than about 0.1% wt%, and most preferably at least about 0.2% wt% with an upper limit of about 0.5 wt% or about 1 wt%. In some aspects, the weight ratio of the beta-1-4 non-ionic polysaccharide to the denatured pea protein or the denatured whey protein is in the range of 1:6 to 1:7.5. In other aspects, the weight ratio of the beta-1-4 non-ionic polysaccharide to the polyurea microcapsule shell is in the range of 1:3 to 1:5.

*Isocyanates.* The terms "isocyanate," "multifunctional isocyanate," and "polyisocyanate" all refer to a compound having two or more isocyanate (-NCO) groups. Suitable isocyanates include, for example, 1,5-naphthylene diisocyanate, 4,4'-diphenylmethane diisocyanate (MDI), hydrogenated MDI (H12MDI), xylylene diisocyanate (XDI), tetramethylxylol diisocyanate (TMXDI), 4,4'-diphenyldimethylmethane diisocyanate, di- and tetraalkyldiphenylmethane diisocyanate, 4,4'-dibenzyl diisocyanate, 1,3-phenylene diisocyanate, 1,4-phenylene diisocyanate, the isomers of tolylene diisocyanate (TDI), optionally in a mixture, 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane, chlorinated and brominated diisocyanate, phosphorus-containing diisocyanate, 4,4'-diisocyanatophenylperfluoroethane, tetramethoxybutane 1,4-diisocyanate, butane 1,4-diisocyanate, hexane 1,6-diisocyanate (HDI), dicyclohexylmethane diisocyanate, cyclohexane 1,4-diisocyanate, ethylene diisocyanate, phthalic acid bisisocyanatoethyl ester, also polyisocyanates with reactive halogen atoms, such as 1-chloromethylphenyl 2,4-diisocyanate, 1-bromomethylphenyl 2,6-diisocyanate, and 3,3-bischloromethyl ether 4,4'-diphenyldiisocyanate. Sulfur-containing polyisocyanates are obtained, for example, by reacting hexamethylene diisocyanate with thiodiglycol or dihydroxydihexyl sulfide. Further suitable diisocyanates are trimethylhexamethylene diisocyanate, 1,4-diisocyanatobutane, 1,2-diisocyanatododecane, dimer fatty acid diisocyanate, or a combination thereof.

Other suitable commercially-available isocyanates sold under the tradenames LUPRANATE^{®} M20 (PMDI, commercially available from BASF containing isocyanate group "NCO" 31.5 wt %), where the average n is 0.7; BAYHYDUR^{®} N304 and BAYHYDUR^{®} N305, which are aliphatic water-dispersible isocyanates based on hexamethylene diisocyanate; DESMODUR^{®} N3600, DESMODUR^{®} N3700, and DESMODUR^{®} N3900, which are low viscosity, polyfunctional aliphatic isocyanates based on hexamethylene diisocyanate; DESMODUR^{®} 3600 and DESMODUR^{®} N100 which are aliphatic isocyanates based on hexamethylene diisocyanate, commercially available from Bayer Corporation (Pittsburgh, PA); PAPI^{®} 27 (PMDI commercially available from Dow Chemical having an average molecular weight of 340 and containing NCO 31.4 wt %) where the average n is 0.7; MONDUR^{®} MR (PMDI containing NCO at 31 wt % or greater, commercially available from Bayer) where the average n is 0.8; MONDUR^{®} MR Light (PMDI containing NCO 31.8 wt %, commercially available from Bayer) where the average n is 0.8; MONDUR^{®} 489 (PMDI commercially available from Bayer containing NCO 30-31.4 wt %) where the average n is 1.0; poly[(phenylisocyanate)-co-formaldehyde] (Aldrich Chemical, Milwaukee, WI), other isocyanate monomers such as DESMODUR^{®} N3200 (poly(hexamethylene diisocyanate) commercially available from Bayer), and TAKENATE^{®} D110N (xylene diisocyanate adduct polymer commercially available from Mitsui Chemicals corporation, Rye Brook, NY, containing NCO 11.5 wt %), DESMODUR^{®} L75 (an isocyanate base on toluene diisocyanate commercially available from Bayer), and DESMODUR^{®} IL (another isocyanate based on toluene diisocyanate commercially available from Bayer).

In some aspects, the isocyanate used in the preparation of the capsules of this invention is a single isocyanate. In other aspects the isocyanate is a combination of isocyanates. In some aspects, the combination of isocyanates includes an aliphatic isocyanate and an aromatic isocyanate. In particular, the combination of isocyanates is a biuret of hexamethylene diisocyanate and a trimethylol propane-adduct of xylylene diisocyanate. In certain aspects, the isocyanate is an aliphatic isocyanate or a combination of aliphatic isocyanate, free of any aromatic isocyanate. In other words, in these aspects, no aromatic isocyanate is used to prepare the capsule wall. In accordance with certain aspects of this invention a trimethylol propane-adduct of xylylene diisocyanate, the wall is formed form a single isocyanate, which is a trimethylol propane-adduct of xylylene diisocyanate.

The average molecular weight of certain suitable isocyanates varies from 250 Da to 1000 Da and preferably from 275 Da to 500 Da. In general, the range of the isocyanate concentration varies from 0.1% to 10%, preferably from 0.1% to 8%, more preferably from 0.2% to 5%, and even more preferably from 1.5% to 3.5% or 0.1% to 5%, all based on the weight of the capsule delivery system. Ideally, the isocyanate is present at a level of between 0.1% and 8% by weight of the core-shell microcapsule composition, or preferably between 0.1% and 5% by weight of the core-shell microcapsule composition or more preferably between 0.1% and 2% by weight of the core-shell microcapsule composition. In certain aspects, the isocyanate is present at a level of less than 1% (*e.g.*, 0.99%, 0.98%, 0.97%, 0.96%, 0.95%, 0.94%, 0.93%, 0.92%, 0.91%, 0.90%, 0.85%, 0.80%, 0.70%, 0.60%, 0.50%, 0.4%, 0.3%, 0.2% or 0.1%) by weight of the biodegradable core-shell microcapsule composition.

*Microcapsule Formation Aids.* Most microcapsule formation aids are used as dispersants (namely, emulsifiers or surfactants). They facilitate the formation of stable emulsions containing nano- or micro-sized oil drops to be encapsulated. Further, microcapsule formation aids improve the performance of the microcapsule by stabilizing capsules and/or their deposition to the target areas or releasing to the environment. The amount of these microcapsule formation aids is anywhere from about 0.1% to about 40% by weight of the microcapsule, more preferably from about 0.1% to about 10%, more preferably about 0.1% to about 5% by weight of the microcapsule.

Examples of microcapsule formation aids are polyvinyl pyrrolidone, polyvinyl alcohol, poly(styrene sulfonate), carboxymethyl cellulose, sodium salt of naphthalene sulfonate condensate, co-polymer of ethylene and maleic anhydride, an alginate, hyaluronic acid, poly(acrylic acid), carboxymethylcellulose, copolymers of acrylic acid and acrylamide, copolymer of acrylamide and acrylamidopropyltrimonium chloride, terpolymers (*i.e.,* terpolymers of acrylic acid, acrylamide, and acrylamidopropyltrimonium chloride), partially or completely hydrolyzed polyvinyl acetate polymers (*i.e.*, polyvinyl alcohol), or a combination thereof.

Other microcapsule formation aids include water-soluble salts of alkyl sulfates, alkyl ether sulfates, alkyl isothionates, alkyl carboxylates, alkyl sulfosuccinates, alkyl succinamates, alkyl sulfate salts such as sodium dodecyl sulfate, alkyl sarcosinates, alkyl derivatives of protein hydrolysates, acyl aspartates, alkyl or alkyl ether or alkylaryl ether phosphate esters, sodium dodecyl sulphate, phospholipids or lecithin, or soaps, sodium, potassium or ammonium stearate, oleate or palmitate, alkylarylsulfonic acid salts such as sodium dodecylbenzenesulfonate, sodium dialkylsulfosuccinates, dioctyl sulfosuccinate, sodium dilaurylsulfosuccinate, poly(styrene sulfonate) sodium salt, isobutylene-maleic anhydride copolymer, sodium alginate, cellulose sulfate and pectin, isobutylene-maleic anhydride copolymer, gum arabic, carrageenan, sodium alginate, pectic acid, tragacanth gum, almond gum and agar; semi-synthetic polymers such as sulfated cellulose, sulfated methylcellulose, carboxymethyl starch, phosphated starch, lignin sulfonic acid; and synthetic polymers such as maleic anhydride copolymers (including hydrolysates thereof), polyacrylic acid, polymethacrylic acid, acrylic acid butyl acrylate copolymer or crotonic acid homopolymers and copolymers, vinylbenzenesulfonic acid or 2-acrylamido-2-methylpropanesulfonic acid homopolymers and copolymers, and partial amide or partial ester of such polymers and copolymers, carboxymodified polyvinyl alcohol, sulfonic acid-modified polyvinyl alcohol and phosphoric acid-modified polyvinyl alcohol, phosphated or sulfated tristyrylphenol ethoxylates.

Commercially available surfactants include, but are not limited to, sulfonated naphthalene-formaldehyde condensates sold under the tradename MORWET^{®} D425 (sodium salt of alkylnaphthalenesulfonate formaldehyde condensate, Akzo Nobel, Fort Worth, TX); partially hydrolyzed polyvinyl alcohols sold under the tradenames MOWIOL^{®}, *e.g.*, MOWIOL^{®} 3-83 (Air Products), or SELVOL^{®} 203 (Sekisui), or polyvinyl alcohols such as Ultalux FP, Ultalux FA, Ultalux AD, OKS-8089 (Sourus); ethylene oxide-propylene oxide block copolymers or poloxamers sold under the tradenames PLURONIC^{®}, SYNPERONIC^{®} or PLURACARE^{®} materials (BASF); sulfonated polystyrenes sold under the tradename FLEXAN^{®} II (Akzo Nobel); ethylene-maleic anhydride polymers sold under the tradename ZEMAC^{®} (Vertellus Specialties Inc.); copolymer of acrylamide and acrylamidopropyltrimonium chloride sold under the tradename SALCARE^{®} SC 60 (BASF); and polyquaternium series such as Polyquaternium 11 ("PQ11;" a copolymer of vinyl pyrrolidone and quaternized dimethylaminoethyl methacrylate; sold by BASF as Luviquat PQ11 AT 1). Surfactant MOWIOL^{®} 3-83 has a viscosity of 2-4 mPa·S (*e.g.*, 3 mPa·S), a degree of hydrolysis of 80-85% (*e.g.*, 83%), an ester value of 170-210 mg KOH/g (*e.g.*, 190 mg KOH/g), and a residual unhydrolyzed acetyl content of 13-18% (*e.g.*, 15%). In certain aspects, the surfactant or emulsifier is a sulfonated polystyrene, *e*.*g*., the high molecular weight polystyrene sulfonate, sodium salt sold under the tradename FLEXAN^{®} II.

In other aspects, the capsule formation aid is a processing aid such as a hydrocolloid, which improves the colloidal stability of the slurry against coagulation, sedimentation and creaming. The term "hydrocolloid" refers to a broad class of water-soluble or water-dispersible polymers having anionic, cationic, zwitterionic or non-ionic character. Hydrocolloids useful in the present disclosure include, but are not limited to, polycarbohydrates, such as starch, modified starch, dextrin, maltodextrin, and cellulose derivatives, and their quaternized forms; natural gums such as alginate esters, carrageenan, xanthan, agar-agar, pectins, pectic acid, gum arabic, gum tragacanth and gum karaya, guar gums and quaternized guar gums; gelatin, protein hydrolysates and their quaternized forms; synthetic polymers and copolymers, such as poly(vinyl pyrrolidone-co-vinyl acetate), poly(vinyl alcohol-co-vinyl acetate), poly((met)acrylic acid), poly(maleic acid), poly(alkyl(meth)acrylate-co-(meth)acrylic acid), poly(acrylic acid-co-maleic acid)copolymer, poly(alkyleneoxide), poly(vinylmethylether), poly(vinylether-co-maleic anhydride), and the like, as well as poly-(ethyleneimine), poly((meth)acrylamide), poly(alkyleneoxide-co-dimethylsiloxane), poly(amino dimethylsiloxane), Ultrez 20 (Acrylates/C10-30 Alkyl Acrylate Crosspolymer), cross-linked homopolymer of acrylic acid polymerized in a cyclohexane and ethyl acetate co-solvent system sold under the tradename CARBOPOL^{®} Ultrez 30, acrylates copolymer sold under the tradename ACULYN^{®} Excel (Acrylates Copolymer), crosslinked polyacrylic acid polymer sold under the tradename CARBOPOL^{®} 981 (Carbomer), and the like, and their quaternized forms. In certain aspects, the microcapsule composition is prepared in the presence of gum arabic as a hydrocolloid.

The capsule formation aid can also be used in combination with carboxymethyl cellulose ("CMC"), polyvinylpyrrolidone, polyvinyl alcohol, alkylnaphthalenesulfonate formaldehyde condensates, and/or a surfactant during processing to facilitate capsule formation. Examples of surfactants that can be used in combination with the capsule formation aid include, but are not limited to, cetyl trimethyl ammonium chloride (CTAC), poloxamers sold under the tradenames PLURONIC^{®} (*e*.*g*., PLURONIC^{®} F127), PLURAFAC^{®} (*e*.*g*., PLURAFAC^{®} F127), or Miranet-N, saponins sold under the tradename Q-NATURALE^{®} (National Starch Food Innovation); or a gum arabic such as Seyal or Senegal. In certain aspects, the CMC polymer has a molecular weight range between about 90,000 Daltons to 1,500,000 Daltons, preferably between about 250,000 Daltons to 750,000 Daltons and more preferably between 400,000 Daltons to 750,000 Daltons. The CMC polymer has a degree of substitution between about 0.1 to about 3, preferably between about 0.65 to about 1.4, and more preferably between about 0.8 to about 1.0. The CMC polymer is present in the capsule slurry at a level from about 0.1% to about 2% and preferably from about 0.3% to about 0.7%. in other aspects, polyvinylpyrrolidone used in this invention is a water-soluble polymer and has a molecular weight of 1,000 to 10,000,000. Suitable polyvinylpyrrolidone are polyvinylpyrrolidone K12, K15, K17, K25, K30, K60, K90, or a combination thereof. The amount of polyvinylpyrrolidone is 2-50%, 5-30%, or 10-25% by weight of the capsule delivery system. Commercially available alkylnaphthalenesulfonate formaldehyde condensates include MORWET^{®} D-425, which is a sodium salt of naphthalene sulfonate condensate by Akzo Nobel, Fort Worth, TX.

*Encapsulation Methods.* As demonstrated herein, a polymeric wall prepared with an isocyanate and a denatured pea or whey protein will form an improved core-shell microcapsule encapsulating an active material when the microcapsule is prepared in the presence of a beta-1-4 non-ionic polysaccharide. Advantageously, the inclusion of a denatured pea or whey protein and beta-1-4 non-ionic polysaccharide such as xyloglucan provides desirable microcapsule properties such as reduced microcapsule breakage percent after spraying to powders and improved dry performance in a powder detergent application.

Accordingly, the present disclosure provides methods for producing core-shell microcapsule compositions, which involves the steps of: (a) preparing an aqueous phase by: (i) combining a denatured pea protein or a denatured whey protein with water; (ii) adjusting the pH to above 9; and (iii) adding gum arabic and guanidine carbonate and mixing until homogenous; (b) preparing an oil phase including an active material and trimethylol propane-adduct of xylylene diisocyanate, wherein the trimethylol propane-adduct of xylylene diisocyanate is present at a level between 0.1% and 8% based on the weight of the core-shell microcapsule composition; (c) emulsifying the oil phase into the aqueous phase to form an emulsion; (d) adding the beta-1-4 non-ionic polysaccharide to the emulsion within at least 1 minute, preferably within at least 30 seconds, or preferably immediately before the commencement of curing step (e), or within at least 1 minute, preferably within at least 30 seconds, or preferably immediate after the commencement of curing step (e); and (e) curing the emulsion at a temperature below 80°C so that a core-shell microcapsule composition is produced.

In accordance with some aspects, the microcapsules prepared according to the method above are cured at a temperature below 80°C, or preferably below 70°C. Ideally, the slurry is cured at a temperature in the range of 50°C to 80°C (*e.g.*, 55°C to 65°C, 55°C to 70°C, 55°C to 80°C) for 1 minute to 10 hours (*e.g.*, 0.1 hours to 5 hours, 0.2 hours to 4 hours and 0.5 hours to 3 hours). Preferably, the microcapsules slurry is cured at a temperature between 63-67°C, or more preferably at 65°C.

*Active Materials.* The microcapsule compositions of the invention have one or more active materials encapsulated therein. In some aspects, the active material has a logP value (partition coefficient) of less than 2. In certain aspects, the microcapsules include at least two, three, four or more active materials in the core. Active materials that may be encapsulated in the core-shell microcapsule of this invention include, but are not limited to, fragrances, flavors, agricultural actives, pesticides, pharmaceutical actives, nutraceutical actives, animal nutrition actives, food actives, microbio actives, malodor counteractants, and/or cosmetic actives. In certain aspects, the active material includes at least one fragrance, pro-fragrance, malodor counteractive agent, or a combination thereof. In particular aspects, the active material is a fragrance comprising at least one, at least two, at least three, at least four, at least five, at least six, at least seven, at least eight, at least nine or at least ten High Performance fragrance ingredients comprising Ultra High-Impact fragrance ingredients as listed in Table 1 and High-Impact fragrance ingredients as listed in Table 2.

**Table 1 - Ultra High-Impact Fragrance Ingredients**

| **No.** | **Trade Name** | **CAS** |
|---|---|---|
| 1. | ALD C-11 INTRELEVEN (TT) PRG | 143-14-6 |
| 2. | ALD C-6 TOCO | 66-25-1 |
| 3. | AMBER XTREME^{™} | 476332-65-7 647828-16-8 |
| 4. | AMBERMOR EX | 6790-58-5 |
| 5. | AMBERMORKET AL | 57345-19-4 |
| 6. | AMBROCENIDE CRYST | 211299-54-6 |
| 7. | CALONE | 28940-11-6 |
| 8. | CITRYLAL BHT | 90480-35-6 147060-73-9 |
| 9. | CLONAL | 2437-25-4 |
| 10. | CREOSOL #340 | 93-51-6 |
| 11. | CRESYL ACET PARA COEUR | 140-39-6 |
| 12. | DECENAL, CIS-4 | 21662-09-9 |
| 13. | DODECENAL TRANS-2 TOCO | 20407-84-5 |
| 14. | DUPICAL TOCO | 30168-23-1 |
| 15. | DYNASCONE BHT | 56973-85-4 |
| 16. | FLORAL SUPER | 71077-31-1 |
| 17. | FRAGARONE | 16957-70-3 |
| 18. | GALBASCONE ALPHA 95 PRG | 56973-85-4 |
| 19. | GALBASCONE PRG TOCO | 56973-85-4 56973-84-3 |
| 20. | ISO BUTYL QUINOLINE | 67634-06-4 |
| 21. | ISO BUTYL THIAZOLE | 18640-74-9 |
| 22. | JAMUNATE | 7605-52-9 |
| 23. | KOUMALACTONE 10 PCT TEC FIRM | 77-93-0 |
| 24. | MANGONE CSM | 38462-22-5 |
| 25. | MELOZONE | 30772-79-3 |
| 26. | METH HEPTIN CARBONATE | 111-12-6 |
| 27. | METH LAITONE 10 PCT DPG | 110-98-5 |
| 28. | METH PHEN ETH ETHER | 3558-60-9 |
| 29. | NONADIENAL,2-TR-6-CIS TOCO | 557-48-2 |
| 30. | NONENOL,CIS-6 TOCO | 35854-86-5 |
| 31. | OPALENE TOCO | 174155-47-6 |
| 32. | ORENYLE | 29127-83-1 |
| 33. | ORRIS ALD TOCO | 60784-31-8 |
| 34. | OXANE 50 PCT TEC | 59323-76-1 59324-17-3 |
| 35. | PASSION FRUIT CMPD | 59323-76-1 |
| 36. | PHARAONE 10 PCT DPG | 110-98-5 |
| 37. | PYRAZINE 044 (METH) | 109-08-0 |
| 38. | ROSE OXIDE "L" TOCO | 16409-43-1 |
| 39. | ROSYRANE SUPER | 60335-71-9 |
| 40. | SACRAZOLE-018 | 137-00-8 |
| 41. | THIAZOLE (2-ISO PROP 4-METH) | 15679-13-7 |
| 42. | TRIDECENE-2-NITRILE | 22629-49-8 |
| 43. | TROPICALIA TOCO | 10138-32-6 |
| 44. | VIONIL NEAT | 67019-89-0 |
| 45. | HEALINGWOOD *¹* | Natural Oil |
| 46. | VIOLET LEAF ABS EGYPT LMR *¹* | Natural Oil |

| | | |
|---|---|---|
| *¹* Available from International Flavors & Fragrances Inc. | | |

**Table 2 - High-Impact Fragrance Ingredients**

| **No.** | **Trade Name** | **CAS** |
|---|---|---|
| 1. | ACETOPHENONE | 98-86-2 |
| 2. | AGRUNITRILE | 51566-62-2 |
| 3. | ALD AA TRIPLAL BHT | 68039-49-6 |
| 4. | ALD C-10 | 112-31-2 |
| 5. | ALD C-11 MOA BHT | 19009-56-4 |
| 6. | ALD C-11 ULENIC TOCO | 112-45-8 |
| 7. | ALD C-11 UNDECYLIC TOCO | 112-44-7 |
| 8. | ALD C-12 LAURIC TOCO | 112-54-9 |
| 9. | ALD C-12 MNA TOCO | 110-41-8 |
| 10. | ALD C-16 STRAWB#2 | 77-83-8 |
| 11. | ALD C-18 | 104-61-0 |
| 12. | ALD C-8 TOCO | 124-13-0 |
| 13. | ALD C-9 TOCO | 124-19-6 |
| 14. | AMBERTONIC | 1392325-86-8 |
| 15. | AMBRETTOLIDE | 28645-51-4 |
| 16. | AQUAFLORA TOCO | 1339119-15-1 |
| 17. | BENZALD FFC | 100-52-7 |
| 18. | CASHMERAN | 33704-61-9 |
| 19. | CEDRAMBER | 67874-81-1 |
| 20. | CITRAL NEW | 5392-40-5 |
| 21. | COOLWOOD | 1340502-69-3 |
| 22. | CRESOL PARA EXTRA | 106-44-5 |
| 23. | CRISTALFIZZ | 1093653-57-6 |
| 24. | CYCLAPROP | 68912-13-0 |
| 25. | CYCLEMAX | 7775-00-0 |
| 26. | DAMASCENONE TOCO | 23696-85-7 |
| 27. | DAMASCONE DELTA | 71048-82-3 |
| 28. | DELPHONE | 4819-67-4 |
| 29. | DIPHEN OXIDE | 101-84-8 |
| 30. | DORIFFOX | 149713-23-5 |
| 31. | ETH ACETO ACET | 141-97-9 |
| 32. | ETH CAPROATE | 123-66-0 |
| 33. | ETH PHEN GLYC | 121-39-1 |
| 34. | ETH SAL | 118-61-6 |
| 35. | ETH-2-METH BUTY | 7452-79-1 |
| 36. | EUCALYPTOL USP | 470-82-6 |
| 37. | FLORHYDRAL TOCO (ELINCS) | 125109-85-5 |
| 38. | FRUITATE (ELINCS) | 129520-41-8 |
| 39. | HEXADECANOLIDE BHT | 109-29-5 |
| 40. | HEXENYL ISOBUTY,CIS-3 (VERDURAL B) | 41519-23-7 |
| 41. | INDOLE | 120-72-9 |
| 42. | IONONE ALPHA TOCO | 127-41-3 |
| 43. | IRONE V BHT | 79-69-6 |
| 44. | ISO CYCLO CITRAL TOCO | 1423-46-7 |
| 45. | LACTONE OF CIS JASMONE TOCO | 70851-61-5 |
| 46. | LEMONILE | 61792-11-8 |
| 47. | MELONAL TOCO | 106-72-9 |
| 48. | MENTHONE 85 | 89-80-5 |
| 49. | METH BENZOATE | 93-58-3 |
| 50. | METH CINNAMATE TOCO | 103-26-4 |
| 51. | METH DH JASMONATE | 24851-98-7 |
| 52. | METH HEPTYL KETONE | 821-55-6 |
| 53. | METH JASMONATE TOCO | 39924-52-2 |
| 54. | METH OCTIN CARBONATE | 111-80-8 |
| 55. | METH PARA CRESOL | 104-93-8 |
| 56. | METH TUBERATE RD | 35205-76-6 |
| 57. | MUSCEMOR (ELINCS) | 82356-51-2 |
| 58. | MYRAC ALD BHT | 52475-89-5 |
| 59. | NECTARYL LRG 1371 ELINCS | 95962-14-4 |
| 60. | OCEANOL | 33662-58-7 |
| 61. | OPERANIDE (ELINCS) | 823178-41-2 |
| 62. | PHEN ETH ACET | 103-45-7 |
| 63. | PINEAPPLE CMPD | 3658-77-3 |
| 64. | PINO ACETALD TOCO | 33885-51-7 |
| 65. | ROSALVA | 13019-22-2 |
| 66. | ROSE OXIDE TOCO | 16409-43-1 |
| 67. | ROSETHYL | 64988-06-3 |
| 68. | SAFRALEINE | 54440-17-4 |
| 69. | SINFONIDE | 1315251-11-6 |
| 70. | STARFLEUR TOCO | 1254940-85-6 |
| 71. | SYLVONIC | 98-55-5 |
| 72. | TERPINOLENE P UB BHT | 586-62-9 |
| 73. | TOFFEE LACTONE 2067 | 705-86-2 706-14-9 |
| 74. | TOFFEETONE FOR NON TSCA USE ONLY | 13537-82-1 |
| 75. | TONKALACTONE | 54491-17-7 |
| 76. | TRIFERNAL BHT | 16251-77-7 |
| 77. | ULTRAVANIL Q COLIPA | 2563-07-7 |
| 78. | UNDECALACTONE,DEL T A | 710-04-3 |
| 79. | UNDECAVERTOL TOCO | 81782-77-6 |
| 80. | VANITROPE | 94-86-0 |
| 81. | VARAMOL-106 | 7786-61-0 |
| 82. | VELTOL PLUS | 4940-11-8 |
| 83. | VERAMOSS | 4707-47-5 |
| 84. | VERIDIAN | 811412-48-3 |
| 85. | VERTOLIFF TOCO | 36635-35-5 |
| 86. | VERTONIC | 1945993-03-2 |
| 87. | VETIVER ACET HAITI TOCO BLO | 84082-84-8 |
| 88. | YARA YARA | 93-04-9 |
| 89. | YLANGANATE | 89-71-4 |
| 90. | ARMOISE OIL PURE *¹* | Natural oil |
| 91. | BLKCURRANT BUD ABS BURGUNDY LMR FOR LIFE *¹* | Natural oil |
| 92. | CHAMOMILE OIL ENG *³* | Natural oil |
| 93. | CHAMOMILE OIL ROMAN LMR SFO *¹* | Natural oil |
| 94. | CINNAMON BARK ESSENTIAL LMR *¹* | Natural oil |
| 95. | DAVANA OIL LMR FLG SFO *¹* | Natural oil |
| 96. | EUGENOL NAT EX CLOVE LEAF OIL | Natural oil |
| 97. | JASMIN ABS EGYPT LMR *¹* | Natural oil |
| 98. | ORANGE FLOWER WATER ABS TUNISIA LMR *¹* | Natural oil |
| 99. | OSMANTHUS ABS LMR *¹* | Natural oil |
| 100. | PATCHOULI OIL LIGHT BLO *²* | Natural oil |
| 101. | PEPPER PINK CO2 LMR *¹* | Natural oil |
| 102. | ROSE ABS DAMASCENA PURE BLO *¹* | Natural oil |
| 103. | SINENSAL NATURAL 20 EX ORANGE *³* | Natural oil |
| 104. | THYME OIL WHITE SPAIN BLO *¹* | Natural oil |

| | | |
|---|---|---|
| *¹* Available from International Flavors & Fragrances Inc (New York). *²* Available from TRIPPER PTE Ltd. (Indonesia). *³* Available from TREATT & CO. Ltd. (United Kingdom). | | |

In addition to the fragrance ingredients listed in Tables 1 and 2, the fragrance may include at least one additional fragrance ingredient. Preferably, the fragrance may include 1, 2, 3, 4, 5, 6, 7, 8, 9, 10, 15, 20, 25, 30, 35, 40 or more additional fragrance ingredients, which are not listed in Tables 1 and 2. Non-limiting examples of such additional fragrance ingredients include those described in US 2018/0325786 A1, US 4,534,891, US 5,112,688, and US 5,145,842. Other suitable active materials that can be encapsulated include those listed in WO 2016/049456, pages 38-50.

The additional fragrance ingredients, when combined with one or more fragrance ingredients of Tables 1 and 2, constitute the total fragrance composition. In this respect, the balance of the 100 wt% relative to the total weight of the fragrance component is made up of one or more Ultra High-Impact and High-Impact fragrance ingredients of Tables 1 and 2 and one or more additional fragrance ingredients.

It has been surprisingly discovered that a fragrance that includes certain types of Ultra High-Impact and High-Impact fragrance ingredients results in High Performance fragrance ingredients for use in fabric care compositions, preferably fabric conditioner, that improves fragrance profile and/or performance of the system. As used herein, the term "fragrance profile" means the description of how the fragrance is perceived by the human nose at any moment in time. The fragrance profile may change over time. It is a result of the combination of the base, heart and top notes, if present, of a fragrance. Base notes are characterized by providing animalic, woody, sweet, amber or musky characters, and not being very volatile. Heart notes are associated with desirable characters such as floral characters (*e*.*g*., jasmin, rose), fruity, marine, aromatic or spicy characters. The "top or head notes" provide citrusy, green, light, or fresh characters and tend to evaporate quickly due to their high volatility. A fragrance profile is composed of two characteristics: 'intensity' and 'character'. The 'intensity' relates to the perceived strength whilst 'character' refers to the odor impression or quality of the perfume, *i.e.,* fresh, clean, etc.

The active material component (*e*.*g*., fragrance) of the core-shell microcapsules is present at a level of between 1 wt% and 35 wt%, preferably between 15 wt% and 35 wt%, or more preferably between 20 wt% and 35 wt%, relative to the weight of the composition. When the fragrance includes a combination of the Ultra High-Impact fragrance ingredients and the High-Impact fragrance ingredients listed in Tables 1 and 2, the fragrance can be used at a significantly reduced dosage (*e.g.*, at least 2-, 5- to 10-fold lower levels) as compared to a standard fragrance that does not include the Ultra High-Impact fragrance ingredients and High-Impact fragrance ingredients listed in Tables 1 and 2. In particular, a fragrance including at least five High Performance fragrance ingredients comprising Ultra High-Impact fragrance can be used at a dosage level of ≤ 1 wt% (*e.g.*, 0.01 wt% to 1 wt%) relative to the total weight of the microcapsule composition. In certain aspects, when the fragrance is a neat fragrance, an encapsulated fragrance or a combination thereof, the weight ratio of the Ultra High-Impact fragrance ingredients to the High-Impact fragrance ingredients is in the range of 1:0 to 1:19.

In addition to the active materials, the present disclosure also contemplates the incorporation of additional components including core modifier materials in the core encapsulated by the microcapsule wall. Other components include solubility modifiers, density modifiers, stabilizers, viscosity modifiers, pH modifiers, deposition aids, capsule formation aids, catalysts, processing aids or any combination thereof. These components can be present in the wall or core of the microcapsules, or outside the microcapsules in the microcapsule composition to improve solubility, stability, deposition, capsule formation, and the like. Further, the additional components may be added after and/or during the preparation of the microcapsule composition of the present disclosure. The one or more additional materials can be added in the amount of from 0.01% to 25% (*e.g.,* from 0.5% to 10%) by weight of the microcapsule composition.

One or more rheology modifiers or viscosity control agents can be added to the microcapsule composition to achieve a desired viscosity of the composition so that the microcapsule is dispersed in the composition for a prolonged period of time. During capsule preparation, the rheology modifier is preferably added prior to the emulsification of the aqueous phase and oil phase and is typically dispersed homogeneously in the microcapsule slurry and outside of the microcapsule wall of the microcapsules in the composition of this invention. Suitable rheology modifiers include an acrylate copolymer, a cationic acrylamide copolymer, a polysaccharide, or a combination thereof. In certain aspects, polysaccharides of use as rheology modifiers include starches, pectin, and vegetable gums such as alginin, guar gum, locust bean gum, and xanthan gum, *e*.*g*., xanthan gum sold under the tradename KELTROL^{®} T (80-mesh food-grade), commercially available from CP Kelco, Atlanta, GA). Preferably, the at least one rheology modifier is a xanthan gum.

One or more preservatives can be added to the microcapsule composition to prevent damage or inadvertent growth of microorganisms for a specific period of time thereby increasing shelf life. The preservative can be any organic preservative that does not cause damage to the microcapsule composition. Suitable water-soluble preservatives include organic sulfur compounds, halogenated compounds, cyclic organic nitrogen compounds, low molecular weight aldehydes, parabens, propanediol materials, isothiazolinone, quaternary compounds, benzoates, Examples include low molecular weight alcohols, dehydroacetic acids, phenyl and phenoxy compounds, or a combination thereof. A non-limiting example of commercially available water-soluble preservative is a mixture of about 77% 5-chloro-2-methyl-4-isothiazolin-3-one and 23% 2-methyl-4-isothiazolin-3-one. Additional antibacterial preservatives include a 1.5% aqueous solution under the tradename KATHON^{®} CG of Rohm &Haas; 5-bromo available under the tradename BRONIDOX L^{®} of Henkel; 2-bromo-2-nitro-1,3-propanediol available under the tradename BRONOPOL^{®} of Inorex; 1,1'-Hexamethylenebis (5-(p-chlorophenyl) biguanide) and salts thereof, such as acetates and digluconates; 1,3-bis (hydroxy) available under the tradename GLYDANT PLUS^{®} from Ronza; glutaraldehyde; ICI Polyaminopropylbiguanide; dehydroacetic acid; and 1,2-Benzisothiazolin-3-one sold under the tradename PROXEL^{®} GXL.

*Microcapsule Delivery System Formulations.* The microcapsule composition can be formulated into a capsule delivery system (*e*.*g*., a microcapsule composition) for use in consumer products. The capsule delivery system can be a microcapsule slurry suspended in an external solvent (*e.g*., water, ethanol, or a combination thereof), wherein the capsule is present at a level about 0.1% to about 80% (*e.g.*, 70-75%, 40-55%, 50-90%, 1% to 65%, and 5% to 45%) by weight of the capsule delivery system.

Alternatively, or in addition to, the capsule and its slurry prepared in accordance with the present invention is subsequently purified. See US2014/0017287. Purification can be achieved by washing the capsule slurry with water until a neutral pH is obtained.

*Applications.* The delivery systems of the present invention are well-suited for use in a fabric softener, a fabric refresher, or a laundry detergent. Liquid or powder laundry detergents which can use the present invention include those systems described in US 5,929,022, US 5,916,862, US 5,731,278, US 5,565,145, US 5,470,507, US 5,466,802, US 5,460,752, US 5,458,810, US 5,458,809, US 5,288,431, US 5,194,639, US 4,968,451, US 4,597,898, US 4,561,998, US 4,550,862, US 4,537,707, US 4,537,706, US 4,515,705, US 4,446,042, and US 4,318,818. Unit dose pouches, tablets and capsules include those described in EP 1431382 A1, US 2013/0219996 A1, US 2013/0284637 A1, and US 6,492,315. These unit dose formulations can contain high concentrations of a functional material (*e.g.*, about 5-100% fabric softening agent or detergent active), fragrance (*e.g.*, 0.5-100%, 0.5-40%, and 0.5-15%), and flavor (*e.g.*, 0.1-100%, 0.1-40%, and 1-20%). In addition, they can contain no water to limit the water content as low as less than 30% (*e.g.*, less than 20%, less than 10%, and less than 5%). Fabric care products such as rinse conditioners (containing 1 to 30 weight % of a fabric conditioning active), fabric liquid conditioners (containing 1 to 30 weight % of a fabric conditioning active), fabric refreshers, fabric refresher sprays, ironing liquids, and fabric softener systems such as those described in US 6,335,315, US 5,674,832, US 5,759,990, US 5,877,145, US 5,574,179, US 5,562,849, US 5,545,350, US 5,545,340, US 5,411,671, US 5,403,499, US 5,288,417, US 4,767,547 and US 4,424,134.

Liquid fabric softeners/fresheners contain at least one fabric softening agent present preferably at a concentration of 1 to 30% (e.g., 4% to 20%, 4% to 10%, and 8% to 15%). The ratio between the active material and the fabric softening agent can be 1:500 to 1:2 (e.g., 1:250 to 1:4 and 1:100 to 1:8). As an illustration, when the fabric softening agent is 5% by weight of the fabric softener, the active material is 0.01% to 2.5%, preferably 0.02% to 1.25% and more preferably 0.1% to 0.63%. As another example, when the fabric softening agent is 20% by weight of the fabric softener, the active material is 0.04% to 10%, preferably 0.08% to 5% and more preferably 0.4% to 2.5%. The active material is a fragrance, malodor counteractant or a combination thereof. The liquid fabric softener can have 0.15% to 15% of capsules (e.g., 0.5% to 10%, 0.7% to 5%, and 1% to 3%). When including capsules at these levels, the neat oil equivalent (NOE) in the softener is 0.05% to 5% (e.g., 0.15% to 3.2%, 0.25% to 2%, and 0.3% to 1%).

Suitable fabric softening agents include cationic surfactants. Non-limiting examples are quaternary ammonium compounds such as alkylated quaternary ammonium compounds, ring or cyclic quaternary ammonium compounds, aromatic quaternary ammonium compounds, diquaternary ammonium compounds, alkoxylated quaternary ammonium compounds, amidoamine quaternary ammonium compounds, ester quaternary ammonium compounds, or a combination thereof. Fabric softening compositions, and components thereof, are generally described in US 2004/0204337 and US 2003/0060390. Suitable softening agents include esterquats sold under the tradename REWOQUAT^{®} WE 18 commercially available from Evonik Industries and STEPANTEX^{®} SP-90 commercially available from Stepan Corporation.

In particular aspects, the microcapsule composition is used in a fabric softener, a fabric refresher, or a laundry detergent, preferably the consumer product is in the form of a spray-dried powder. In certain aspects, the consumer product includes at least one or more detersive enzymes. Ideally, the microcapsule composition is present at a level between 0.1 wt% and 10 wt%, relative to the weight of the consumer product.

Having demonstrated that the inclusion of a beta-1-4 non-ionic polysaccharide improves the performance of a protein-based microcapsule composition, the present disclosure further provides a method for increasing the performance of a core-shell microcapsule composition in a powder application by preparing a core-shell microcapsule in the presence of a denatured pea protein or a denatured whey protein and adding a beta-1-4 non-ionic polysaccharide, such as xyloglucan, within at least 5, 4, 3 or 2 minutes, preferably within at least 1 minute, preferably within at least 30 seconds, or preferably immediately before the commencement of curing of the core-shell microcapsule or within at least 5, 4, 3 or 2 minutes, preferably within at least 1 minute, preferably within at least 30 seconds, or preferably immediately after the commencement of curing of the core-shell microcapsule. In some aspects, the beta-1-4 non-ionic polysaccharide, such as xyloglucan can be added within at least 30 seconds before the commencement of the curing of the core-shell microcapsules. In particular, inclusion of a beta-1-4 non-ionic polysaccharide in the preparation of a protein-isocyanate microcapsule was found to provide a higher rupture force, improve applied stress tolerance, improve sensory performance, enhance deposition of the microcapsule on a surface, and/or increase stability of the microcapsule composition.

### EXAMPLES

The following non-limiting examples are provided to further illustrate the invention and are not to be construed as limitations of the invention, as many variations of the present invention are possible without departing from its spirit or scope.

### Example 1: Synthesis of Pea Protein-Xyloglucan (XG) Microcapsules with XG Added 1 Minute After Emulsification

Eighty parts by weight of fragrance was admixed with 20 parts by weight of NEOBEE^{®} M-5 (Stepan Corp., Chicago, IL) solvent thereby forming a "fragrance/solvent" composition. The microcapsules were prepared by creating a polymeric wall to encapsulate fragrance/solvent composition droplets. To make the capsule slurries, pea protein powder was first dispersed in water. The pH was adjusted using NaOH (37% solution) to pH 9.5. To this solution, gum arabic was added together with high molecular weight polystyrene sulfonate, sodium salt sold under the tradename FLEXAN^{®} II and the mixture was mixed to homogeneity. Guanidine carbonate and citric acid solutions were mixed and added to the aqueous phase. These components were allowed to react under acidic conditions for 15 minutes to denature the protein. Xanthan gum (1% solution) was added to the reaction mixture together with tannic acid (Tanal-02, 30% solution). TAKENATE^{®}, as the polyisocyanate, was added to the oil phase at 5 wt%. The fragrance/solvent composition was then added to the water phase solution and droplets of the desired size were achieved by high shear homogenization. Xyloglucan (2% solution), previously prepared at 80°C, was slowly added to the microcapsule slurry. Curing of the polymeric layer around the fragrance/solvent composition droplets was carried out at 65°C for 3 hours and 15 minutes. Additionally, a preservative was added. The final microcapsule slurry (Microcapsule 1) is presented in Table 3 and contained an overall fragrance load of 27.1%.

**Table 3 - Microcapsule 1**

| | **Amount (g)** | **Weight %** |
|---|---|---|
| Fragrance | 187.2 | 27.1 |
| Caprylic/capric triglyceride | 46.8 | 6.8 |
| Pea protein | 12.5 | 1.8 |
| Guanidine Carbonate | 7.6 | 1.1 |
| Citric acid | 15.5 | 2.2 |
| FLEXAN^{®} II | 1.5 | 0.2 |
| Gum Arabic | 8.5 | 1.2 |
| TAKENATE^{®} D110N | 5.9 | 0.9 |
| Tanal-02 | 3.0 | 0.4 |
| Xanthan gum | 0.5 | 0.07 |
| Xyloglucan | 1.8 | 0.3 |
| PROXEL^{®} GXL | 0.6 | 0.1 |
| Water | 399 | 57.8 |
| **Total** | **690** | **100** |

### Example 2: Synthesis of Pea Protein-XG Microcapsules with XG Added Before Emulsification

Microcapsule 2 was prepared as described in Example 1, with the following modification: xyloglucan (2% solution) was slowly added to the microcapsule slurry and TAKENATE^{®} was subsequently added to the oil phase at 5 wt%. The fragrance/solvent composition was then added to the water phase solution and droplets of the desired size were achieved by high shear homogenization. Curing of the polymeric layer around the fragrance/solvent composition droplets was carried out at 65°C for 3 hours and 15 minutes. The final microcapsule slurry composition is presented in Table 4 and contained an overall fragrance load of 27.1%.

**Table 4 - Microcapsule 2**

| | **Amount (g)** | **Weight %** |
|---|---|---|
| Fragrance | 187.2 | 27.1 |
| Caprylic/capric triglyceride | 46.8 | 6.8 |
| Pea protein | 12.5 | 1.8 |
| Guanidine Carbonate | 7.6 | 1.1 |
| Citric acid | 15.5 | 2.2 |
| FLEXAN^{®} II | 1.5 | 0.2 |
| Gum Arabic | 8.5 | 1.2 |
| TAKENATE^{®} D110N | 5.9 | 0.9 |
| Tanal-02 | 3.0 | 0.4 |
| Xanthan gum | 0.5 | 0.07 |
| Xyloglucan | 1.8 | 0.3 |
| PROXEL^{®} GXL | 0.6 | 0.1 |
| Water | 399 | 57.8 |
| **Total** | **690** | **100** |

### Example 3: Synthesis of Pea Protein-XG Microcapsules with XG Added 15 Minutes After Emulsification

Microcapsule 3 was prepared as described in Example 1, with the following modification: the fragrance/solvent composition was added to the water phase solution, droplets of the desired size were achieved by high shear homogenization, the slurry was heated at 65°C for 15 minutes and xyloglucan (2% solution) was subsequently added to the microcapsule slurry. Curing of the polymeric layer around the fragrance/solvent composition droplets was carried out at 65°C for 3 hours. Additionally, a preservative was added. The final microcapsule slurry composition is presented in Table 5 and contained an overall fragrance load of 27.1 %.

**Table 5 - Microcapsule 3**

| | **Amount (g)** | **Weight %** |
|---|---|---|
| Fragrance | 187.2 | 27.1 |
| Caprylic/capric triglyceride | 46.8 | 6.8 |
| Pea protein | 12.5 | 1.8 |
| Guanidine Carbonate | 7.6 | 1.1 |
| Citric acid | 15.5 | 2.2 |
| FLEXAN^{®} II | 1.5 | 0.2 |
| Gum Arabic | 8.5 | 1.2 |
| TAKENATE^{®} D110N | 5.9 | 0.9 |
| Tanal-02 | 3.0 | 0.4 |
| Xanthan gum | 0.5 | 0.07 |
| Xyloglucan | 1.8 | 0.3 |
| PROXEL^{®} GXL | 0.6 | 0.1 |
| Water | 399 | 57.8 |
| **Total** | **690** | **100** |

### Example 4: Synthesis of Pea Protein-XG Microcapsules with XG Added 45 Minutes After Emulsification

Microcapsule 4 was prepared as described in Example 1, with the following modification: the fragrance/solvent composition was added to the water phase solution, droplets of the desired size were achieved by high shear homogenization, the slurry was heated at 65°C for 45 minutes and xyloglucan (2% solution) was subsequently added to the microcapsule slurry. Curing of the polymeric layer around the fragrance/solvent composition droplets was carried out at 65°C for 3 hours. Additionally, a preservative was added. The final microcapsule slurry composition is presented in Table 6 and contained an overall fragrance load of 27.1 %.

**Table 6 - Microcapsule 4**

| | **Amount (g)** | **Weight %** |
|---|---|---|
| Fragrance | 187.2 | 27.1 |
| caprylic/capric triglyceride | 46.8 | 6.8 |
| Pea protein | 12.5 | 1.8 |
| Guanidine Carbonate | 7.6 | 1.1 |
| Citric acid | 15.5 | 2.2 |
| FLEXAN^{®} II | 1.5 | 0.2 |
| Gum Arabic | 8.5 | 1.2 |
| TAKENATE^{®} D110N | 5.9 | 0.9 |
| Tanal-02 | 3.0 | 0.4 |
| Xanthan gum | 0.5 | 0.07 |
| Xyloglucan | 1.8 | 0.3 |
| PROXEL^{®} GXL | 0.6 | 0.1 |
| Water | 399 | 57.8 |
| **Total** | **690** | **100** |

### Example 5: Synthesis of Pea Protein-XG Microcapsules with Additional Tannic Acid Cross-Linker

Microcapsule 5 was prepared as described in Example 1, with the following modification: the amount of tannic acid was doubled. The final microcapsule slurry composition is presented in Table 7 and contained an overall fragrance load of 26.7%.

**Table 7 - Microcapsule 5**

| | **Amount (g)** | **Weight %** |
|---|---|---|
| Fragrance | 187.2 | 26.7 |
| Caprylic/capric triglyceride | 46.8 | 6.7 |
| Pea protein | 12.5 | 1.8 |
| Guanidine Carbonate | 7.6 | 1.1 |
| Citric acid | 15.5 | 2.2 |
| FLEXAN^{®} II | 1.5 | 0.2 |
| Gum Arabic | 8.5 | 1.2 |
| TAKENATE^{®} D110N | 5.9 | 0.8 |
| Tanal-02 | 6.0 | 0.9 |
| Xanthan gum | 0.5 | 0.1 |
| Xyloglucan | 1.8 | 0.3 |
| PROXEL^{®} GXL | 0.6 | 0.1 |
| Water | 411 | 58 |
| **Total** | **700** | **100** |

### Example 6: Synthesis of Pea Protein (No XG) Microcapsules with Additional Tannic Acid Cross-Linker

Microcapsule 6 was prepared as described in Example 1, with the following modification: no xyloglucan was included and the amount of tannic acid was doubled. The final microcapsule slurry composition is presented in Table 8 and contained an overall fragrance load of 30.7 %.

**Table 8 - Microcapsule 6**

| | **Amount (g)** | **Weight %** |
|---|---|---|
| Fragrance | 187.2 | 30.7 |
| Caprylic/capric triglyceride | 46.8 | 7.7 |
| Pea protein | 12.5 | 2.0 |
| Guanidine Carbonate | 7.6 | 1.2 |
| Citric acid | 15.5 | 2.5 |
| FLEXAN^{®} II | 1.5 | 0.2 |
| Gum Arabic | 8.5 | 1.4 |
| TAKENATE^{®} D110N | 5.9 | 1.0 |
| Tanal-02 | 6.0 | 1.0 |
| Xanthan gum | 0.5 | 0.1 |
| PROXEL^{®} GXL | 0.6 | 0.1 |
| Water | 317 | 52 |
| **Total** | **610** | **100** |

### Example 7: Synthesis of Pea Protein-XG Microcapsules with Reduced Amount of XG

Microcapsule 7 was prepared as described in Example 1, with the following modification: the amount of xyloglucan was reduced by 50%. The final microcapsule slurry composition is presented in Table 9 and contained an overall fragrance load of 29.0%.

**Table 9 - Microcapsule 7**

| | **Amount (g)** | **Weight %** |
|---|---|---|
| Fragrance | 187.2 | 29.0 |
| Caprylic/capric triglyceride | 46.8 | 7.3 |
| Pea protein | 12.5 | 1.9 |
| Guanidine Carbonate | 7.6 | 1.2 |
| Citric acid | 15.5 | 2.4 |
| FLEXAN^{®} II | 1.5 | 0.2 |
| Gum Arabic | 8.5 | 1.3 |
| TAKENATE^{®} D110N | 5.9 | 0.9 |
| Tanal-02 | 3.0 | 0.5 |
| Xanthan gum | 0.5 | 0.1 |
| Xyloglucan | 0.9 | 0.1 |
| PROXEL^{®} GXL | 0.6 | 0.1 |
| Water | 346 | 53.6 |
| **Total** | **645** | **100** |

### Example 8: Synthesis of Pea Protein-XG Microcapsules with Reduced Fragrance Load

Microcapsule 8 was prepared as described in Example 1, with the following modification: the amount of encapsulated fragrance was reduced. The final microcapsule slurry composition is presented in Table 10 and contained an overall fragrance load of 21.7%.

**Table 10 - Microcapsule 8**

| | **Amount (g)** | **Weight %** |
|---|---|---|
| Fragrance | 150 | 21.7 |
| Caprylic/capric triglyceride | 37.5 | 5.4 |
| Pea protein | 12.5 | 1.8 |
| Guanidine Carbonate | 7.6 | 1.1 |
| Citric acid | 15.5 | 2.2 |
| FLEXAN^{®} II | 1.5 | 0.2 |
| Gum Arabic | 8.5 | 1.2 |
| TAKENATE^{®} D110N | 5.9 | 0.9 |
| Tanal-02 | 3.0 | 0.4 |
| Xanthan gum | 0.5 | 0.1 |
| Xyloglucan | 1.8 | 0.3 |
| PROXEL^{®} GXL | 0.6 | 0.1 |
| Water | 445 | 65 |
| **Total** | **690** | **100** |

### Example 9: Synthesis of Pea Protein-XG Microcapsules with Additional TAKENATE^{®} Cross-Linker

Microcapsule 9 was prepared as described in Example 1, with the following modification: additional TAKENATE^{®} D110N was included. The final microcapsule slurry composition is presented in Table 11 and contained an overall fragrance load of 26.9%.

**Table 11 - Microcapsule 9**

| | **Amount (g)** | **Weight %** |
|---|---|---|
| Fragrance | 187.2 | 26.9 |
| Caprylic/capric triglyceride | 46.8 | 6.7 |
| Pea protein | 12.5 | 1.8 |
| Guanidine Carbonate | 7.6 | 1.1 |
| Citric acid | 15.5 | 2.2 |
| FLEXAN^{®} II | 1.5 | 0.2 |
| Gum Arabic | 8.5 | 1.2 |
| TAKENATE^{®} D110N | 8.8 | 1.3 |
| Tanal-02 | 3.0 | 0.4 |
| Xanthan gum | 0.5 | 0.1 |
| Xyloglucan | 1.8 | 0.3 |
| PROXEL^{®} GXL | 0.6 | 0.1 |
| Water | 399 | 58 |
| Total | **690** | **100** |

### Example 10: Synthesis of Starch-XG Microcapsules with Two Polyisocyanate Cross-Linkers

Eighty parts by weight of fragrance was admixed with 20 parts by weight of NEOBEE^{®} M-5 solvent thereby forming a "fragrance/solvent" composition. The microcapsules were prepared by creating a polymeric wall to encapsulate fragrance/solvent composition droplets. To make the capsule slurries, modified starch sold under the tradename PURITY GUM^{®} Ultra (Ingredion, Westchester, IL) powder was first dispersed in water. To this solution, FLEXAN^{®} II (10% solution) was added together with carboxymethyl cellulose (1% solution) and DABCO (20% solution) and the mixture was mixed to homogeneity. Tanal-01 (30% solution) was added to the reaction mixture. TAKENATE^{®} and DESMODUR^{®}, as the polyisocyanate, were added to the oil phase. The fragrance/solvent composition was then added to the water phase solution and droplets of the desired size were achieved by high shear homogenization. Curing of the polymeric layer around the fragrance/solvent composition droplets was carried out at 80°C for 4 hours and 15 minutes. After 1 hour of curing, xyloglucan (2% solution), previously prepared at 80°C, was slowly added to the microcapsule slurry, followed by addition of second dose of DESMODUR^{®} (20% in acetone). Additionally, a preservative was added. The final microcapsule slurry composition (Microcapsule 10) is presented in Table 12 and contained an overall fragrance load of 30.0%.

**Table 12 - Microcapsule 10**

| | **Amount (g)** | **Weight %** |
|---|---|---|
| Fragrance | 180 | 30 |
| Caprylic/capric triglyceride | 45 | 7.5 |
| PURITY GUM^{®} Ultra | 21 | 3.5 |
| FLEXAN^{®} II | 3.02 | 0.50 |
| Carboxymethyl cellulose | 0.15 | 0.03 |
| DABCO | 0.13 | 0.02 |
| TAKENATE^{®} D110N | 2.4 | 0.4 |
| DESMODUR^{®} N100A | 4.8 | 0.8 |
| Acetone | 12 | 2.0 |
| Tanal-01 | 3.00 | 0.50 |
| Xyloglucan | 1.8 | 0.3 |
| PROXEL^{®} GXL | 0.65 | 0.11 |
| Water | 368.65 | 61.4 |
| **Total** | **600** | **100** |

### Example 11: Synthesis of Starch-XG Microcapsules with Two Polyisocyanate Cross-Linkers and Additional Tannic Acid

Microcapsule 11 was prepared as described in Example 10, with the following modifications: the amount of DESMODUR^{®} N100A was reduced and additional tannic acid was included. Curing of the polymeric layer around the fragrance/solvent composition droplets was carried out at 80°C for 4 hours and 15 minutes. After 1 hour of curing, xyloglucan (2% solution) was slowly added to the microcapsule slurry. Additionally, a preservative was added. The final microcapsule slurry composition is presented in Table 13 and contained an overall fragrance load of 30.0%.

**Table 13 - Microcapsule 11**

| | **Amount (g)** | **Weight %** |
|---|---|---|
| Fragrance | 180 | 30 |
| Caprylic/capric triglyceride | 45 | 7.5 |
| Purity Gum Ultra | 21 | 3.5 |
| FLEXAN^{®} II | 3.02 | 0.50 |
| Carboxymethyl cellulose | 0.15 | 0.03 |
| DABCO | 0.13 | 0.02 |
| TAKENATE^{®} D110N | 2.4 | 0.4 |
| DESMODUR^{®} N100A | 2.4 | 0.4 |
| Tanal-01 | 6.0 | 1.0 |
| Xyloglucan | 1.8 | 0.3 |
| PROXEL^{®} GXL | 0.65 | 0.11 |
| Water | 382.45 | 63.7 |
| **Total** | **600** | **100** |

### Example 12: Synthesis of Starch-XG Microcapsules with Two Polyisocyanate Cross-Linkers, Additional Tannic Acid and Reduced XG

Microcapsule 12 was prepared as described in Example 11, with the following modifications: the amount of xyloglucan was reduced. The final microcapsule slurry composition is presented in Table 14 and contained an overall fragrance load of 30.0%.

**Table 14 - Microcapsule 12**

| | **Amount (g)** | **Weight %** |
|---|---|---|
| Microcapsule Core | | |
| Fragrance | 180 | 30 |
| Caprylic/capric triglyceride | 45 | 7.5 |
| Purity Gum Ultra | 21 | 3.5 |
| FLEXAN^{®} II | 3.02 | 0.50 |
| Carboxymethyl cellulose | 0.15 | 0.03 |
| DABCO | 0.13 | 0.02 |
| TAKENATE^{®} D110N | 2.4 | 0.4 |
| DESMODUR^{®} N100A | 2.4 | 0.4 |
| Tanal-01 | 6.0 | 1.0 |
| Xyloglucan | 0.9 | 0.15 |
| PROXEL^{®} GXL | 0.65 | 0.11 |
| Water | 383.25 | 63.85 |
| **Total** | **600** | **100** |

### Example 13: Synthesis of Melamine Formaldehyde Microcapsules with Xyloglucan Deposition Aid

Eighty parts by weight of fragrance was admixed with 20 parts by weight of NEOBEE^{®} M-5 solvent thereby forming a "fragrance/solvent" composition. The uncoated capsules were prepared by creating a polymeric wall to encapsulate fragrance/solvent composition droplets. To make the capsule slurries, a copolymer of acrylamide and acrylic acid (sold under the tradename ALCAPSOL^{®} 200) was first dispersed in water together with a methylated melamine formaldehyde resin (sold under the tradename CYMEL^{®} 385). These two components were allowed to react under acidic conditions for at least one hour. The fragrance/solvent composition was then added into the solution and droplets of the desired size were achieved by high shear homogenization. Xanthan gum (1% solution) was added as a deposition aid. Curing of the polymeric layer around the fragrance/solvent composition droplets was carried out at 125°C. After cooling down to room temperature, ethylene urea was added into the microcapsule slurry. Additionally, a rheology modifier and a preservative were added. The pH was adjusted using NaOH. The final microcapsule slurry composition (Microcapsule 13) is presented in Table 15 and contained an overall fragrance load of 24.37 %.

**Table 15 - Microcapsule 13**

| | | **Amount (g)** | **Weight (%)** |
|---|---|---|---|
| Microcapsule Core | | | |
| | Fragrance | 182 | 28 |
| | Caprylic/capric triglyceride | 45.5 | 7 |
| Microcapsule Wall | | | |
| | Copolymer of acrylamide and acrylic acid | 74 | 11.4 |
| | Methylated melamine formaldehyde resin | 10 | 1.5 |
| Ethylene Urea | | 13.3 | 2 |
| ACULYN^{®} 33 | | 6.5 | 1 |
| Water | | 319.2 | 49.1 |
| **Total** | | **650** | **100** |

### Example 14: Synthesis of Pea Protein Microcapsules without XG

Eighty parts by weight of fragrance was admixed with 20 parts by weight of NEOBEE^{®} M-5 solvent thereby forming a "fragrance/solvent" composition. The microcapsules were prepared by creating a polymeric wall to encapsulate fragrance/solvent composition droplets. To make the capsule slurries, pea protein powder was first dispersed in water. The pH was adjusted using NaOH (37% solution) to pH 9.5. Gum arabic was added to this solution, together with FLEXAN^{®} II and the mixture was mixed to homogeneity. Guanidine carbonate and citric acid solutions were mixed and added to the aqueous phase. These components were allowed to react under acidic conditions for 15 minutes. Xanthan gum (1% solution) was added to the reaction mixture together with Tanal-02 (30% solution). TAKENATE^{®}, as the polyisocyanate, was added to the oil phase at 5 wt%. The fragrance/solvent composition was then added to the water phase solution and droplets of the desired size were achieved by high shear homogenization. Curing of the polymeric layer around the fragrance/solvent composition droplets was carried out at 65°C for 3 hours and 15 minutes. Additionally, a preservative was added. The final microcapsule slurry composition (Microcapsule 14) is presented in Table 16 and contained an overall fragrance load of 31.2%.

**Table 16 - Microcapsule 14**

| | **Amount (g)** | **Weight %** |
|---|---|---|
| Fragrance | 187.2 | 31.2 |
| Caprylic/capric triglyceride | 46.8 | 7.8 |
| Pea protein | 12.5 | 2.1 |
| Guanidine Carbonate | 7.6 | 1.3 |
| Citric acid | 15.5 | 2.6 |
| FLEXAN^{®} II | 1.5 | 0.3 |
| Gum Arabic | 8.5 | 1.4 |
| TAKENATE^{®} D110N | 5.9 | 1.0 |
| Tanal-02 | 3.0 | 0.5 |
| Xanthan gum | 0.5 | 0.1 |
| PROXEL^{®} GXL | 0.6 | 0.1 |
| Water | 311 | 51.7 |
| **Total** | **600** | **100.0** |

### Example 15: Analytical and Sensory Data

As shown in the Table 17, Microcapsules 1 and 7 exhibited better performance compared to pea protein microcapsules without xyloglucan (Microcapsule 14), thereby demonstrating the advantage of including xyloglucan in the preparation of a pea protein microcapsule composition. In addition, the best performance observed was when the xyloglucan was added just after emulsification (Microcapsules 1, 5, 7, 8, and 9 compared to Microcapsules 2, 3 and 4), thereby demonstrating that the time of addition of the xyloglucan mediates improved dry performance of the microcapsules. This analysis further indicated that increasing the amount of tannic acid crosslinker (Microcapsules 5 and 6) decreased the performance compared to Microcapsule 1. In addition, changing the wall material to modified starch and adding extra cross-linker (Microcapsules 10, 11, and 12) decreased performance compared to Microcapsule 1. Lowering the fragrance load (Microcapsule 8) or increasing TAKENATE^{®} (Microcapsule 9) was shown to improve performance compared to Microcapsule 14 and exhibited parity performance with commercial melamine formaldehyde capsules (Microcapsules 13).

**Table 17 - Dry Sensory Performance**

| **Microcapsule** | **Fragrance load (%)** | **PS Mode (µm)** | **Viscosity @ 21.s-1** | **Dry Sensory Performance vs Microcapsule 14** | **Dry Sensory Performance vs Microcapsule 13** |
|---|---|---|---|---|---|
| 1 | 27.1 | 27.7 | 511 | ++ | = |
| 2 | 27.1 | 49.0 | 1000 | = | - |
| 3 | 27.1 | 31.0 | 450 | = | - |
| 4 | 27.1 | 30.0 | 420 | = | - |
| 5 | 26.7 | 20.5 | 461 | + | - |
| 6 | 30.6 | 22.4 | 400 | + | - |
| 7 | 29.0 | 22.0 | 500 | + | - |
| 8 | 21.7 | 22.9 | 299 | ++ | = |
| 9 | 26.9 | 22.9 | 404 | ++ | = |
| 10 | 30.0 | 9.37 | 1474 | = | - |
| 11 | 30.0 | 10.6 | 692 | + | - |
| 12 | 30.0 | 12.7 | 313 | + | - |
| 13 (Comparative Microcapsule) | 24.7 | 5.0 | 800 | ++ | N.A. *¹* |
| 14 (Comparative Microcapsule) | 31.2 | 22.0 | 450 | N.A.*¹* | - |

| | | | | | |
|---|---|---|---|---|---|
| *¹* N.A., not applicable. | | | | | |

### Example 16: Preparation of Powder Detergent Samples Containing Microcapsules

Un-fragranced bio-detergent powder was used. Microcapsules 1-14 were diluted in water and added to the powder detergent and mixed. The finished powder detergent base contained 0.043 % neat oil equivalent. Samples were prepared one day prior to the washing experiment in Example 17.

### Example 17: Hand Wash Protocol of the Powder Detergent Finished Samples Containing Microcapsules

Five grams of powder detergent were used for 1 L of water containing two small terry towels. The stainless-steel wash basin was filled with water at 20°C. The right amount of washing product was added to the water and stirred to dissolve. The wash load contained only cotton terry towels. The towels were left to soak and then each towel was folded twice and put thought the mangle. The wash basin was filled with clean water and towels were rinsed. Some samples were kept for damp evaluation and the rest were line dried at room temperature for dry evaluation.

### Example 18: Sensory Performance Evaluation of Microcapsules 1-14 Hand Washed in Powder Detergent

The randomly selected damp samples were evaluated by several experts using the intensity scale 0-5, where 0 = "no performance" and 5 = "strong performance." The evaluation was performed "blind," such that each sample had a randomly allocated number. The dry evaluation was performed the day following the damp and was performed by the same experts using the same intensity scale 0-5. Sensory scores were recorded before and after each of the randomly selected cloths (contained in a separate polyethylene bag) was gently handled.

### Example 19: Time of Addition XG is Important for Good Dry Performance

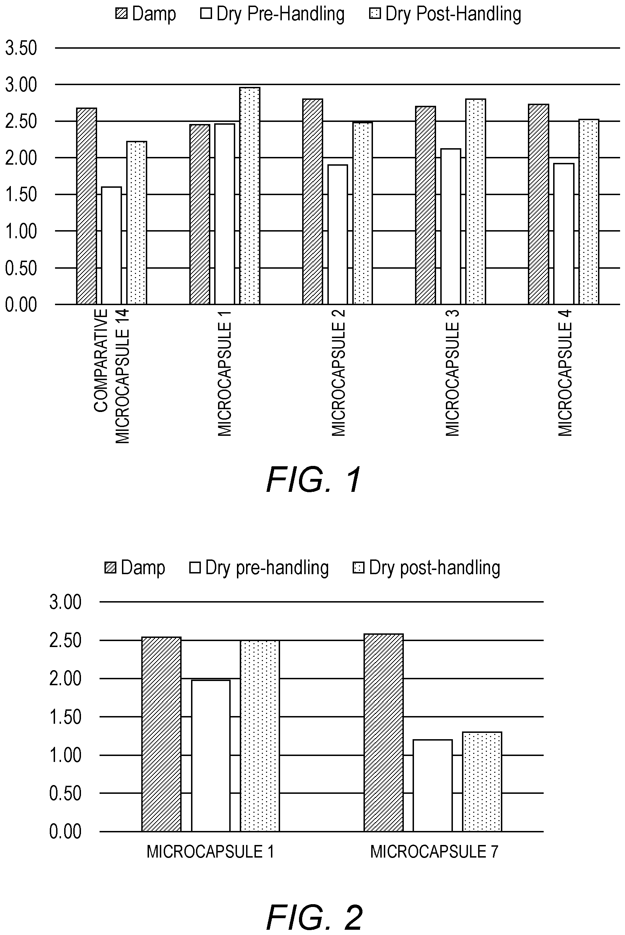

FIG. 1 shows that Microcapsule 1 outperformed Microcapsules 2, 3 and 4 at dry touch points, with significantly better performance and intensity than Comparative Microcapsule 14 with no XG. These data demonstrate that the addition of XG right after emulsification (t=0) gives better performance compared to other addition times (Microcapsules 2, 3 and 4).

### Example 20: Amount of XG is Important for Good Dry Performance

FIG. 2 provides data demonstrating that the amount of xyloglucan is important for a good dry performance in powder detergent washing machine applications. Microcapsule 1 exhibited improved dry performance compared to Microcapsule 7, which had half the amount of xyloglucan, thereby demonstrating that xyloglucan improves wall strength.

### Example 21: Amount of XG is Important for Good Dry Performance

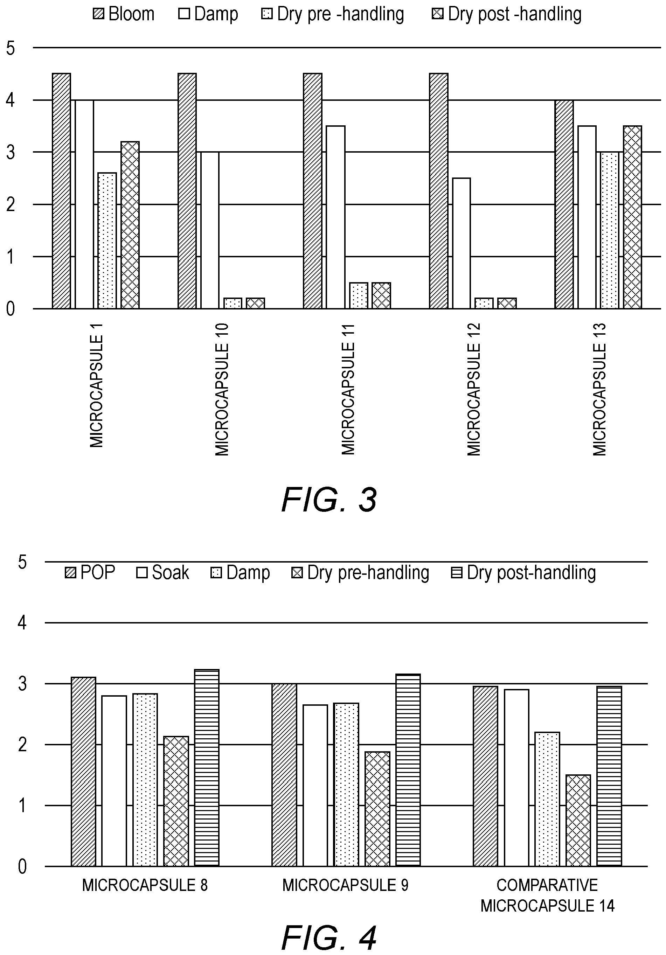

FIG. 3 shows the sensory performance result of capsules sprayed to powder detergent and washed in a hand wash protocol. Pea protein wall material microcapsules (Microcapsule 1) showed significantly better performance at dry stages compared to modified starch (PGU) wall material capsules (Microcapsules 10, 11 and 12), and similar performance to melamine formaldehyde microcapsules (Microcapsule 13).

### Example 23: Capsule Spray Breakage Test

Capsules were sprayed with a pressure of 1 Bar to the commercial unperfumed OMO Red Core PWD VN powder detergent base at a dosage of 0.05% NOE. The detergent was mixed for 5 minutes. Breakage was measured (FIG. 4). It was noted that percent breakage after spraying was improved by including xyloglucan (Microcapsules 8 and 9) when compared to Microcapsule 14 with no xyloglucan. Moreover, lowering the fragrance load (Microcapsules 8) further reduced breakage percent compared to commercial melamine formaldehyde microcapsules (Microcapsule 13) (Table 18).

**Table 18 - Capsule Breakage**

| **Sample** | **Actual Breakage %** |
|---|---|
| Microcapsule 8 (lower fragrance load) | 29.50 |
| Microcapsule 9 (more TAKENATE^{®}) | 34.50 |
| Comparative Microcapsule 14 | 35.00 |
| Microcapsule13 (melamine formaldehyde) | 31.50 |

### Example 24: Mechanical Strength

The mechanical strength of the capsules was characterized by a micromanipulation technique. Slurry was diluted in water at 0.2% NOE of which one drop was placed on a glass slide and air dried. Dried microcapsules were aligned with the compressing probe and compressed at a speed of 2 µms-1. The rupture force, deformation and applied stress are presented below in Table 19.

**Table 19 - Mechanical Strength of Capsules**

| | **Force µN** | **Deformation %** | **Stress MPa** |
|---|---|---|---|
| Microcapsule 1 | 147,7±37,7 | 48,4±3,8 | 0,7±0,2 |
| Comparative Microcapsule 14 | 89,9±17,3 | 48,9±3,6 | 0,4±0,1 |
| Comparative Microcapsule 13 | 109,9±28,5 | 32,2±3,9 | 0,6±0,2 |

Microcapsule 1 (pea protein-xyloglucan based microcapsules) exhibited the best strength in terms of rupture force. Notably, the rupture force of Microcapsule 1 was nearly double the rupture force of pea protein microcapsules without xyloglucan (Comparative Microcapsule 14) with the same deformation. Microcapsule 1 also showed improved wall strength compared to melamine formaldehyde microcapsules (Microcapsule 13).

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present disclosure have been illustrated and described, it would be obvious to those skilled in the art that various other changes and modifications can be made without departing from the spirit and scope of the disclosure. It is therefore intended to cover in the appended claims all such changes and modifications that are within the scope of this disclosure.

## Claims

1. A core-shell microcapsule composition, wherein the microcapsule has a microcapsule core and a microcapsule wall encapsulating the microcapsule core,
the microcapsule core contains an active material, wherein the active material comprises at least one fragrance, pro-fragrance, malodor counteractive agent, or a combination thereof, and
the microcapsule wall is formed of a polymeric network comprising a denatured pea protein or a denatured whey protein and a beta-1-4 non-ionic polysaccharide,
wherein the microcapsule wall is **characterized by** a nominal rupture force of at least 100 µN.

2. The core-shell microcapsule composition of claim 1, wherein the core-shell microcapsule composition is prepared by a process in which the beta-1-4 non-ionic polysaccharide is added within at least 1 minute, preferably within at least 30 seconds, or preferably immediately before the commencement of the curing of the polymeric network, or within at least 1 minute, preferably within at least 30 seconds, or preferably immediately after the commencement of curing of the polymeric network.

3. The core-shell microcapsule composition of claim 1 or 2, wherein the beta-1-4 non-ionic polysaccharide is xyloglucan.

4. The core-shell microcapsule composition of claim 3, wherein the xyloglucan is present in an amount of from 0.1 wt% to 5 wt%, or preferably from 0.1 wt% to 1 wt%, or preferably from 0.1 wt% to 0.5 wt%, relative to the weight of the core-shell microcapsule composition.

5. The core-shell microcapsule composition of any one of the preceding claims, wherein the weight ratio of the beta-1-4 non-ionic polysaccharide to the denatured pea protein or the denatured whey protein is in the range of 1:6 to 1:7.5.

6. The core-shell microcapsule composition of any one of the preceding claims, wherein the weight ratio of the beta-1-4 non-ionic polysaccharide to the microcapsule wall is in the range of 1:3 to 1:5.

7. The core-shell microcapsule composition of any one of the preceding claims, wherein the core-shell microcapsule is a microcapsule comprising polyurea.

8. The core-shell microcapsule composition of any one of the preceding claims, wherein the active material is a fragrance present at a level of 1 wt% to 35 wt% relative to the weight of the core-shell microcapsule composition.

9. The core-shell microcapsule composition of any one of claims 1 to 7, wherein the active material is a fragrance present in an amount of 0.01 wt% to 1 wt%, relative to the total weight of the core-shell microcapsule composition, and the fragrance comprises at least five High Performance fragrance ingredients comprising Ultra High-Impact fragrance ingredients as listed in Table 1, High-Impact fragrance ingredients as listed in Table 2, or combinations thereof.

10. The core-shell microcapsule composition of any one of the preceding claims, wherein the fragrance is a neat fragrance, an encapsulated fragrance or a combination thereof and the weight ratio of the Ultra High-Impact fragrance ingredients to the High-Impact fragrance ingredients is in the range of 1:0 to 1:19.

11. The core-shell microcapsule composition of any one of the preceding claims, wherein the denatured pea protein or the denatured whey protein has a purity of at least 80%.

12. A method of producing a core-shell microcapsule composition comprising
(a) preparing a homogenous aqueous phase by:
(i) combining a denatured pea protein or a denatured whey protein with water,
(ii) adjusting the pH to above 9,
(iii) adding gum arabic and guanidine carbonate, and
(iv) mixing until homogenous;
(b) preparing an oil phase comprising an active material and trimethylol propane-adduct of xylylene diisocyanate, wherein the trimethylol propane-adduct of xylylene diisocyanate is present at a level between 0.1% and 4 % based on the weight of the core-shell microcapsule composition;
(c) emulsifying the oil phase into the aqueous phase to form an emulsion;
(d) adding a beta-1-4 non-ionic polysaccharide to the emulsion within at least 1 minute, preferably within at least 30 seconds, or preferably immediately before commencement of curing step (e) or within at least 1 minute, preferably within at least 30 seconds, or preferably immediately after commencement of curing step (e); and
(e) curing the emulsion at a temperature below 80°C so that a core-shell microcapsule composition is produced.

13. A consumer product comprising the core-shell microcapsule composition of any one of claims 1 to 11, wherein the consumer product is a fabric softener, a fabric refresher, or a laundry detergent, preferably wherein the consumer product is in the form of a spray-dried powder.

14. The consumer product of claim 13, wherein the consumer product further comprises 0.1 wt% to 10 wt%, relative to the weight of the consumer product, of at least one or more detersive enzymes.

15. A method for increasing the performance of a core-shell microcapsule composition in a powder application comprising preparing a core-shell microcapsule in the presence of a denatured pea protein or a denatured whey protein and adding a beta-1-4 non-ionic polysaccharide within at least 1 minute, preferably within at least 30 seconds, or preferably immediately before the commencement of the curing of the core-shell microcapsule, or within at least 1 minute, preferably within at least 30 seconds, or preferably immediately after the commencement of curing of the core-shell microcapsule, thereby increasing the performance of the core-shell microcapsule composition as compared to a control microcapsule in the powder application, preferably wherein the increased performance comprises higher rupture force, improved applied stress tolerance, improved sensory performance, enhanced deposition of the microcapsule on a surface, increased stability, or a combination thereof.
